# EUROPEAN PATENT SPECIFICATION

(11) **EP 2 960 186 B1**
(45) Date of publication and mention of the grant of the patent: **17.01.2018**
(21) Application number: 15173853.1
(22) Date of filing: 25.06.2015
(51) Int. Cl.: B65G 15/52, F16G 3/02, F16G 3/09

(54) **SYSTEM AND METHOD FOR THE ARTICULATED CONNECTION OF TWO SECTIONS OF AN ENDLESS CONVEYOR**
SYSTEM UND VERFAHREN FÜR DIE GELENKIGE VERBINDIDUNG VON ZWEI ABSCHNITTEN EINES ENDLOSEN FÖRDERBANDS
SYSTÈME ET PROCÉDÉ POUR LA LIAISON ARTICULEE DE DEUX SECTIONS D'UNE BANDE TRANSPORTEUSE SANS FIN

(30) Priority: 26.06.2014 GB 201411340
(43) Date of publication of application: 30.12.2015
(73) Proprietor: R S Hall Engineering Limited, Thirsk, Yorkshire YO7 3NX (GB)
(72) Inventor: HALL, Roger Smith, Thirsk, Yorkshire YO7 3NX (GB)
(74) Representative: Murgitroyd & Company

(56) References cited:
- EP-A1- 0 312 629
- EP-A1- 2 845 459
- DD-A1- 270 649
- GB-A- 2 212 241
- US-A- 1 547 694

## Description

The invention relates to a conveyor assembly according to the preamble of claim 1, and to a method for the articulated connection of two web sections of an endless conveyor according to the preamble of claim 10. The invention is in particular applicable for use in connection with a conveyor web, separation web, separation conveyor, screening conveyor, sizing or grading conveyor or the like of the sort which is used in the agricultural and food industries to separate products according to size and/or to separate desired product from unwanted debris. In particular, the invention relates to a separation web or screen conveyor for use in association with root crop harvesters to facilitate the separation of stones, mud, crop tops and other debris from the crop. Discussion of the invention herein is in that context by way of example. However it should be understood that the invention is not limited to application in this field of technology but find potential use in any situation where it is desirable to provide an endless conveyor comprising articulated sections on a medium to large scale.

Separation webs, screens and graders which take the form of an endless conveyor onto which the product to be separated is transferred, the conveyor surface being provided with a grid, screen or the like have widespread application in a number of areas of the agricultural and food industries. Such devices, known variously as separation webs, separation conveyors, screen conveyors, grading conveyors, and the like have a range of applications both in separating and sizing products and in separating products from debris.

A particular form of conveyor, to which the invention is particularly though not exclusively applicable, is a screening conveyor for use with a root crop harvester to enable separation of stones, mud, extraneous vegetation and other debris from the root crop. In such devices, the conveyor is typically an endless conveyor web comprising an endless grid screen, the grid screen typically taking the form of at least two parallel endless belts linked transversely by a plurality of generally parallel and typically generally evenly spaced transverse members, such as solid rods. The transverse rods make up the screen with the pitch of the rods giving the effective screening size. As the conveyor is driven, with product on top of the conveyor screen, the desired crop is generally retained above the screen, whilst mud, stones and other debris generally falls through the gaps defined by adjacent cross members to be discarded.

Drive means are provided which typically take the form of drive cylinders located internally with the endless conveyor wound therearound. Since the belts are heavy, significant stresses can build up in the webbing strips as the conveyor passes around the drive cylinders.

This can be offset to some extent by dividing the conveyor into sections with articulated linkages between adjacent conveyor sections and for example between the webbing strips of adjacent sections.

Prior art systems are known in which a web conveyor is made up of a plurality of linked conveyor sections, with adjacent sections being linked, for example in that the elongate webs making up the web conveyor are linked, by provision of articulated linkages having a transversely extending pivot, for example in the form of a hinge such as a rod/sleeve or barrel hinge, extending in the direction transverse to an elongate direction of the web conveyor section to allow articulation about a pivot axis transverse to the elongate direction.

Examples of such an arrangement can be found for example, in European Patent Publication EP0312629. This publication describes a conveyor, in particular for a root crop harvester, which consists of at least two carrier belts disposed parallel to each other in an elongate direction, and a plurality of evenly spaced and parallel transversely extending rods. The web conveyor is divided into a plurality of sections which are linked by means of articulated linkages between each belt at adjacent ends.

Referring to figures 1 and 2 of that reference by way of example, the linkage assembly in the prior art consists of first and second structures with a mutually articulating engagement, each structure having a connection plate (11, 12) but engages under its respective free belt end (13, 14) and is clamped thereon with a pressure piece (15, 16) which also clamps in position the end most two transverse rods 3. The two pieces are articulated together in that respective partial sleeve formations (8, 9, 10) or hinge eyes co-operate when the assembly is brought together to form a complete sleeve housing to receive the pivot member (23) and form a transverse barrel hinge. EP2845459 discloses a conveyor assembly according to the preamble of claim 1 wherein a first linkage assembly comprises a second linkage body having a second sleeve formation at a first end and a first linkage formation at a second end distal from the first end, wherein the first and second sleeve formations are shaped so as together to be assembled to provide a single sleeve formation into which the pivot member is surroundingly received; wherein a second linkage assembly further comprises a second linkage body having a second sleeve formation at a first end and a second linkage formation at a second end distal from the first end, wherein the first and second sleeve formations are shaped so as together to be assembled to provide a single sleeve formation into which the pivot member is surroundingly received.

This document also discloses a method for the articulated connection of two web sections of an endless conveyor according to the preamble of claim 10.

However, this document is a document according to Art. 54(3) EPC.

In particular, EP2845459 describes a screen chain conveyor in the form of a screening rod conveyor for root crop harvesting machines that is provided with a belt fastener in the area of at least one of the support belts that receive respective transverse conveying rods, wherein the belt fastener comprises at least one hinge-like articulated connection in the area of connecting members engaging the respective belt ends.

GB2212241 describes a toothed belt end connecting device, serving in use to connect together the ends of a toothed belt in which longitudinal reinforcing cords are incorporated, which has at least two interconnecting lock parts. DD270649 discloses a conveyor assembly according to the preamble of claim 1 and a method for the articulated connection of two web sections of an endless conveyor according to the preamble of claim 10. More particularly, it describes an endless connection by means of which the belts of a harvesting machine such as a potato harvesting machine may be joined together.

In some arrangements of this type, such as the embodiment of European Patent Publication EP0312629, a separate pivot pin is inserted into the receiving sleeve formed by the paired hinge eyes to simultaneously connect the first and second structures and thus link the respective sections. In other cases, it is known to use the end of a transverse rod for this purpose. In either case, the link between the first and second conveyor sections is completed by insertion of the pivot member into the hinge sleeve.

Dividing the conveyor into sections with articulated linkages such as in the examples given can assist to some extent in accommodating drive loads. Even so, failure of the webbing, particularly in the vicinity of these linkages, is a problem.

Moreover, such linkage systems do not lend themselves very readily to in-field assembly, or to in-field disassembly for example for repair. Insertion of a pivot member into the hinge sleeve to complete the hinge and also the connection between conveyor sections can a difficult operation in practice in situ on the machine, especially in an in-field secenario.

The present invention seeks to mitigate some or all of the above disadvantages by provision of an alternative linkage system and method, and in particular preferably by provision of an alternative linkage system and method that reduces the bending stresses experienced by the web as it passes around a drive and/ or that is adapted for ease of in-field assembly and/ or to facilitate in-field disassembly for example for cleaning or repair.

In accordance with the invention a conveyor assembly such as defined in claim 1 is provided. In use a first and second conveyor section are joined together first by means of the attachment of a first linkage assembly to the first conveyor section, a second linkage assembly to the second conveyor section, and then by engagement between the first and second linkage formations of the respective first and second linkage assemblies. Thus, the linkage assemblies are first attached to their respective conveyor sections and completion of the link between the conveyor sections is effected by mounting together the first and second linkage formations in rigid fixed relationship. Assembly of each individual linkage formation may be effected off machine and the linkage formations then attached to their respective conveyor sections. The linkage formations may be supplied as assembled units. The process of attaching the two conveyor sections is simplified to one of engaging each linkage formation to its respective conveyor section and then mounting the respective first and second linkage assemblies together. The necessary mountings may be simple and for example rigid mechanical engagements. The assembly process may therefore be simplified. The conveyor engagement portion of each linkage assembly is mountable in rigid fixed relationship to its respective conveyor section. A similarly rigid fixed engagement is made between the two linkage assemblies by connection together of the linkage formations. A pivoting capability about an axis transverse of the longitudinal direction of the conveyor is provided by the sleeve and pivot member assembly of each respective linkage assembly.

This is conveniently effected in that the first and second sleeve formations of a linkage assembly are shaped and configured so as to cooperate together when assembled to define together a single sleeve structure which is suitably shaped and sized to receive the pivot member, such that the assembly at this point constitutes a sleeve and rod or barrel hinge disposed in a direction and pivotable about an axis transverse of the longitudinal direction of the linked conveyor sections. The pivot member is shaped to define a surface about which the sleeve formations may rotate in use in familiar manner. A sleeve and rod or barrel hinge is provided within each linkage formation, between a first linkage body that engages for example rigidly with a first conveyor section and a second linkage body that engages for example rigidly with its counterpart on the other linkage formation.

The final connection is not effected at either hinge. Rather, the final connection is effected by mounting together the first and second linkage formations in rigid fixed relationship. Assembly of each individual linkage formation may be effected off machine and the linkage formations then attached to their respective conveyor sections. The linkage formations may be supplied as assembled units in which completion of the hinge is effected by insertion of a bespoke pin and bearing arrangement and most preferably may be supplied as sealed bearing units. The mountings between the respective linkage formations may be of simple design for ease of assembly on machine, and for example may be simple rigid mechanical engagements. The on machine assembly process may therefore be simplified compared with existing methods of providing hinge and pin articulation, where the assembly/ disassembly of respective conveyor sections is effected by insertion/ removal of a joining pin (either a bespoke pin or an end of a transverse rod as the case may be) into the receiving sleeve formed by the sleeve portions of the two parts to be joined.

The provision of an assembly in accordance with the provision of separate linkage formations on each respective linkage assembly which are adapted so as to be mounted together in rigid fixed relationship provides for effective assembly/disassembly of the two conveyor sections, by mounting and demounting of the two linkage formations, which might for example facilitate in-field assembly and/or in-field disassembly e.g. cleaning or repair.

Moreover the design of linkage offers greater flexibility than that of prior art designs for example in relation to different web conveyor configurations, and in particular, different transverse member pitches, with a potential to mitigate load problems that might be encountered using typical drive systems, in particular by the provision of two separate linkage assemblies each of which provides a discrete articulating pivot in association with its respective conveyor and for example web section.

Since the final connection is not effected at either hinge but is effected by mounting together the first and second linkage formations in rigid fixed relationship, the linkage formations may be supplied as assembled units and most preferably may be supplied as sealed bearing units.

Thus, in accordance with the preferred embodiment of the invention, each of the first and second linkage assemblies is provided in an assembled condition with the first and second linkage bodies assembled together so that the hinge link composed of the first and second sleeve formations and a pivot member in the form of a pivot pin, for example with suitable bearings, is assembled for rotation of the sleeve portions and hence of the respective first and second linkage bodies about the pivot pin received within the sleeve formation.

More preferably, each of the first and second linkage assemblies is provided in an assembled condition wherein the hinge link composed of the first and second sleeve formations, pivot pin and suitable bearings is a sealed unit, and so that the hinge link is mounted for rotation about the pivot pin on the sealed bearings. In this way, a pivoting articulation is provided in use at two points in the assembled whole, at the hinge in each first and second linkage assembly between its first and second linkage bodies. This is separate from the location of the mechanical connection between the two linkage assemblies, which is formed by the mechanical engagement of the first and second linkage formations of the first and second linkage assemblies.

Such a design can be contrasted with that of existing methods, which make use of the hinge and pin arrangement, where the pin is typically removable to enable the web to be joined in-situ on the machine, and for example in the field. By contrast, in accordance with the present invention, the web sections may be joined in-situ on the machine, and for example in the field, by means of mounting together of the first and second linkage formations of the first and second linkage assemblies, and the individual linkage assemblies (and the hinged pivoting parts thereof) may be provided without requiring assembly in-situ. This is a particular advantage of the arrangement of the present invention.

In accordance with the invention, connection is completed between the first linkage assembly and the second linkage assembly (and hence when each linkage assembly is attached to a respective conveyor section, between first and second conveyor sections, by mounting together the first and second linkage formations in rigid fixed relationship). The first and second linkage formations are mutually adapted so as to be so mountable together.

The first and second linkage formations may be mutually adapted so as to be mountable together in rigid fixed relationship by a releasable or a permanently fixed mechanism. Preferably, a releasable mechanism is provided to facilitate in-situ assembly and disassembly. The first and second linkage formations comprise mutually engageable mounting plates with mutually engageable faces. The mounting portions are adapted to engage together, for example by provision of mutually engageable projections and recesses or the like and/maybe adapted to be engaged together by means of additional fixing formations. Each of the first and second linkage formations comprises a mounting plate with mutually engageable mounting faces, and with complementarily positioned through apertures for receipt of connecting members, in particular, lockable and releasable connecting members such as screw threaded connecting members, and for example such as nuts and bolts.

Such an arrangement provides for simple assembly and disassembly in-situ in the field of the first and second linkage assemblies, and accordingly of the first and second conveyor sections on which they are mounted in use in a more complete conveyor assembly.

Each linkage body is provided with a conveyor engagement portion at a first end. Preferably, the conveyor engagement portion is adapted to effect a fixed and rigid engagement upon an end portion of a conveyor and in particular an end portion of a web or the web conveyor in use.

In a suitable embodiment, the conveyor engagement portion is adapted to engage with a conveyor end of a conveyor section, and for example with a web end of a web conveyor section, in that it is provided with integral or separate fixing formations or a combination of the two adapted to engage upon the said conveyor end and for example the said web end.

In a possible embodiment, the conveyor/ web engagement portion comprises an engagement plate adapted to present a first fixing face for face to face engagement with a first face of an end of a conveyor/ web, and for example adapted to be fixed thereupon by the provision of additional fixing members. In a particularly preferred embodiment, additional fixing members are provided comprising an additional fixing formation adapted to present a second fixing face to a second face of the conveyor/ web opposite the first face such that the conveyor engagement portion and the additional fixing formation face each other whereby the end of the conveyor/ web is clamped therebetween in use. In a particularly convenient arrangement, the two adjacent formations are provided with complementary through apertures for receipt of connecting members, in particular, lockable and releasable connecting members such as screw threaded connecting members, and for example such as nuts and bolts.

In the preferred application of the invention, in relation to web conveyors comprising web conveyor sections consisting of at least two parallel belts linked transversely by a plurality of generally parallel and even spaced transverse members, the clamping mechanism may additionally be adapted to clamp one or more endmost transverse members in conjunction with an end of a web.

It is a particular adaptation of the invention that each of the first and second linkage assemblies includes a transverse articulation about a rotational pivot axis in a direction transverse to the belt, in that it is divided between a first linkage body that engages upon the belt and a second linkage body that carries the linkage formation by which connection is made to its adjacent linkage assembly. This pivot is effected in that the respective first and second linkage bodies of a linkage assembly define mutually co-operable sleeve formations which come together which form a continuous single sleeve for the receipt of a pivot formation or pivot member about which the two linkage bodies may pivot relative to each other and thus effect in the assembled whole a transverse articulation about a rotational pivot axis in a direction transverse to the belt.

To effect this, the respective first and second sleeve formations are shaped so as together to be assembleable to provide a single continuous sleeve into which the pivot formation or pivot member may be surroundingly received. The assembled whole thus forms a barrel hinge and suitable design principals will be familiar.

Typically, each of the first and second sleeve formations will comprise one or more sleeve portions, and in particular cylindrical sleeve portions, of essentially the same diameter, being spaced apart and laterally offset relative to each other, such that when the two are brought together, a single generally continuous sleeve is formed.

The pivot formation will preferably be configured to present a bearing surface to the inside surface of the single generally continuous sleeve so formed about which the sleeve portions and hence the respective linkage bodies may rotate. Typically the pivot formation or member will define a cylindrical bearing surface. Typically the pivot formation will comprise a cylindrical rod or pin. Preferably the pivot member will comprise a bespoke pivot pin. Bearings may additionally be provided. Preferably, as noted above, the hinge is provided as a sealed unit in which the sleeve portions and hence the respective linkage bodies are journalled to rotate about a pivot pin on sealed bearings.

In some prior art designs, a barrel hinge is formed in which the pivot's function is performed by an end of a transverse bar making up the web conveyor, being received in a sleeve so formed. The invention does not necessarily exclude such arrangements, but it is a particular advantage of the present invention that such arrangements are not necessary. Instead, in a preferred case a bespoke pivot pin may be used, and in particular, a hinge formation may be formed as a sealed bearing unit as above described.

If it is nevertheless desirable to have a transverse bar extend across from the linkage system at the site of the pivot, for example if it is desirable to have a transverse bar at this point to maintain the pitch across the web joint, the linkage assembly may be provided with an additional receiving aperture to receive such a transverse bar.

For example, the pivot formation or member may be hollow with a longitudinal and for example axial recess shaped to receive an end of such a transverse bar. Alternatively a lateral extension to a part of the linkage assembly may be provided with a recessed portion shaped to receive such a transverse bar. The transverse bar may be a transverse web bar of equivalent configuration to the other transverse web bars or a bespoke filler bar specifically designed for the purpose.

The assembly effects engagement between a first and a second conveyor section, with the sleeve and pivot assemblies of each of the first and second linkage assemblies providing a pivoting hinge formation disposed in a direction and pivotable about an axis transverse of the longitudinal direction of the assembled conveyor, but with the final assembly and disassembly engagement being effected when the respective linkage formations of the first and second linkage assemblies are mounted together in rigid fixed relationship. In accordance with the invention, a method for the articulated connection of two web sections of an endless conveyor assembly such as described in claim 10 is provided. Such an endless conveyor web for example comprises an endless grid screen, the grid screen typically taking the form of at least two parallel endless belts linked transversely by a plurality of generally parallel and typically generally evenly spaced transverse members, such as solid rods. The web conveyor is for example screening conveyor for use with a root crop harvester to enable separation of stones, mud, extraneous vegetation and other debris from the root crop, the transverse rods making up a separation screen with the pitch of the rods giving the effective screening size.

The web conveyor may take the form of at least two parallel belts linked transversely by a plurality of generally parallel and typically generally evenly spaced transverse members, such as solid rods, and particular preferred embodiments are discussed below in this context.

In particular, the web conveyor is of the conventional ladder type, comprising at least one pair of endless conveyor strips, with a plurality of rigid transverse members such as rods extending therebetween, the transverse members being generally parallel and generally evenly pitched to define the pitch of the web.

Drive means are preferably provided which typically take the form of drive cylinders located internally with the endless conveyor wound therearound. Conveniently, the conveyor and drive means are co-operably mounted on a frame which allows for relative movement therebetween to bring the drive means into and out of engagement with the separation web.

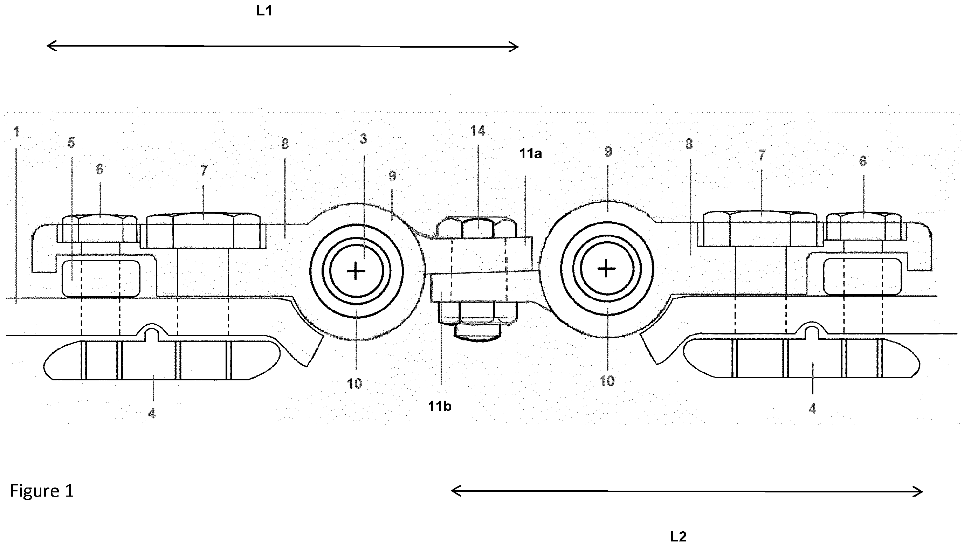

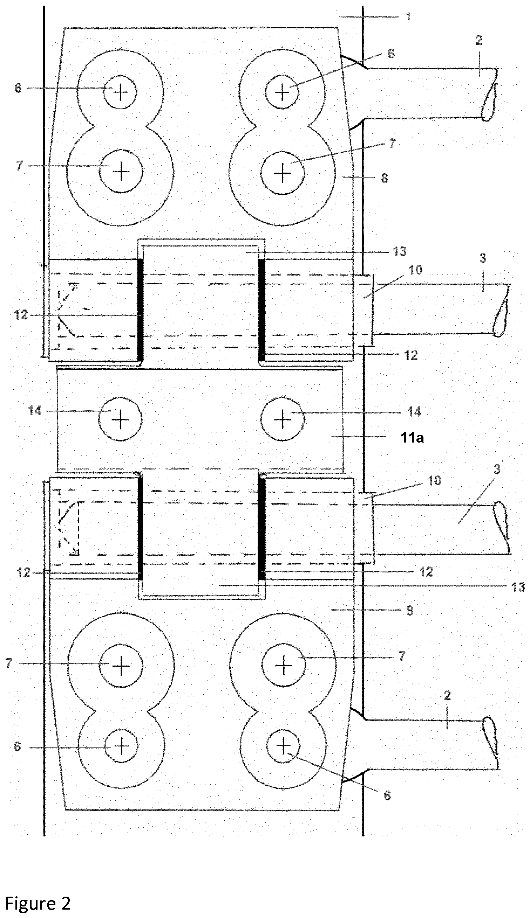

The invention will now be described by way of example only with reference to figures 1 and 2 of the accompanying drawings in which:
Figure 1 is a cross section through a web belt of a web conveyor linked in accordance with a linkage of an embodiment of the invention;
Figure 2 is a plan view of the linkage system illustrated in figure 1.

An embodiment of the invention is presented in figures 1 and 2 as applied in the preferred embodiment to link two sections of a conveyor of the form that comprises at least two parallel belts linked transversely by a plurality of transverse rods. The transverse rods make up the screen with the pitch of the rods giving an effective screen size. Accordingly, it is desirable to maintain a constant pitch.

Figures 1 and 2 illustrate the assembly of an embodiment of the invention as it joins respective end sections of one such belt of such a web conveyor.

The connector in accordance with the embodiment of the invention is used to connect the respective ends of two belts 1. A linkage assembly embodying the principles of the invention is shown attached to each belt end. A first linkage assembly generally designated L1 is provided at an end of a first belt on the left in figure 1 and a second linkage assembly generally designated L2 is provided at an end of a second belt on the right in figure 1. The first and second linkage assemblies are constructed to generally identical principles and like reference numerals are used for like components in each.

In a more complete assembly (not shown) at least two parallel belts will be provided (each joined in the illustrated manner) with a plurality of transverse rods making up the web bars 2 that extends between them and define the separation web in familiar manner.

Each linkage assembly L1, L2 consists of two parts, a hinge plate part including a hinge plate 8 and a linkage part including a linkage plate 11.

The hinge plate 8 extends rearwardly over an upper surface of the end of belt 1. A lower surface at the end of belt 1 is provided with a pressure plate 4 and the hinge plate and pressure plate are bolted together in order to grip the end of the belt 1.

In the illustrated embodiment, a pressure plate clamp bolt 7 is shown which clamps directly to the pressure plate, and a second bolt 6 is shown which clamps through an end of an endmost web bar 5 to the pressure plate 4. A recessed lower portion of the hinge plate 8 accommodates the web bar end 5. The web bar 5 may be of a typical design, equivalent to the other web bars (not shown) supported along the length of the belt, as web bar ends are typically of this formation in order to be bolted to the belt in any event. It is a particularly advantageous feature of the design of the present invention that at least one such endmost web bar is clamped by the belt engaging formation in this manner.

Each linkage assembly L1, L2 has an articulating pivot consisting of a hinge sleeve defined by complementary enmeshed hinge sleeve portions or hinge eyes, a first hinge eye 9 extending from the hinge plate 8 and a second hinge eye 13 extending from the linkage plate, respectively designated 11a in the case of the first linkage assembly L1, and 11b in the case of the second linkage assembly L2. When brought together the two sleeve portions or hinge eyes define a cylindrical recess for receiving a hinge joining pin 10 about which the hinge eyes may rotate, and hence provide a transverse articulation axis permitting relative articulating movement between the hinge plate part and the linkage plate part. Discrete linkage plates 11a and 11b are provided as part of the first linkage assembly L1 and of the second linkage assembly L2, which are releasably linked together by means of the hinge link connecting bolts 14. This releasable connection is entirely separate from the pivoting hinges themselves. This can be contrasted with existing methods which use a hinge and pin where the pin is removeable to enable the belt sections to be joined. By contrast in accordance with the present invention, completion of the connection between two linkage assemblies L1, L2 is effected by means of the bolted connection via bolts 14 of a first linkage formation comprising the first hinge linkage 11a and a second linkage formation comprising the second hinge linkage 11b.

An advantage of this arrangement is that it simplifies connection in-situ on the machine, and for example in the field, relative to prior art arrangements where the pin is typically inserted/ removed to enable the web to be assembled/ disassembled in-situ. By contrast, in accordance with the embodiment, the linkage assemblies may be assembled first, and for example provided pre-assembled, and the web end may be joined in-situ on the machine, and for example in the field, by means of the bolted connection via bolts 14 of the two hinge linkages 11a, 11b.

A further advantage of this arrangement is that it gives much greater flexibility of the design of each hinge. Two particular examples of the refinements that are possible are shown in the illustrated embodiment.

First, the hinge may be formed as a pre-assembled sealed unit. In the illustrated embodiment, each hinge eye 9 may be constructed to rotate about the hinge joining pin 10 on sealed bearings, with the unit being sealed by virtue of the seals 12. Such an arrangement would not be possible where it was desirable to insert the pin in-situ to enable the web to be joined on the machine.

Second, in the illustrated embodiment, the pin 10 is in the form of a hollow bush. This allows a bespoke "filling bar" 3, otherwise identical to one of the web bars but without the flattened bolted end, to be received in and located through the centre of the pin 10. By this means, and by appropriate sizing of the hinge linkages 11a, 11b, the pitch of the web bars may be maintained across the web joints as desired.

A design such as represented by the illustrated embodiments embodying the principles of the invention, enables a solution which mitigates disadvantages of prior art systems, and in particular which provides for flexibility to accommodate a range of different web pitches in a system which is more readily assembleable and dissassembleable in-situ, and which allows for the provision of sealed bearings for the pivoting hinge.

## Claims

1. A conveyor assembly comprising at least:
a first web section;
a first linkage assembly (L1) comprising a first linkage body having a conveyor engagement portion (8) at a first end, which conveyor engagement portion (8) is mounted to an end of the first web section in fixed rigid relationship, and a first sleeve formation (9) at a second end distal from the first end, and a pivot member (10) ; a second web section;
a second linkage assembly (L2) comprising a first linkage body having a conveyor engagement portion (8) at a first end, which conveyor engagement portion (8) is mounted to an end of the second web section in fixed rigid relationship, and a first sleeve formation (9) at a second end distal from the first end, and a pivot member (10); **characterised in that**:
the first linkage assembly (L1) further comprises a second linkage body having a second sleeve formation (13) at a first end and a first linkage formation (11a) at a second end distal from the first end, wherein the first (9) and second (13) sleeve formations are shaped so as together to be assembled to provide a single sleeve formation into which the pivot member (10) is surroundingly received;
**in that** the second linkage assembly (L2) further comprises a second linkage body having a second sleeve formation (13) at a first end and a second linkage formation (11b) at a second end distal from the first end, wherein the first (9) and second (13) sleeve formations are shaped so as together to be assembled to provide a single sleeve formation into which the pivot member (10) is surroundingly received; **in that** the first (11a) and second (11b) linkage formations are mutually adapted so as to be mountable together in rigid fixed relationship; **in that** the first (11a)
and second (11b) linkage formations comprise mutually engageable mounting plates with mutually engageable faces and with complementarily positioned through apertures for receipt of connecting members (14), and the conveyor assembly further comprises such connecting members (14);
and further **in that** the first and second linkage bodies of each linkage assembly (L1, L2) are respectively assembled together so as to constitute a hinge link composed of the first and second sleeve formations (9, 13) and the pivot member (10) for rotation of the sleeve portions about the pivot member.

2. A conveyor assembly in accordance with claim 1 wherein the first and second sleeve formations (9, 13) of a linkage assembly (L1; L2) are shaped and configured so as together to be assembleable to provide a single continuous sleeve into which the pivot member (10) may be surroundingly received.

3. A conveyor assembly in accordance with claim 2 wherein pivot member (10) is shaped to define and present a bearing surface about which the sleeve formations (9, 13) may rotate.

4. A conveyor assembly in accordance with any preceding claim wherein the pivot member (10) is a pivot pin received within the sleeve formation (9, 13).

5. A conveyor assembly in accordance with any preceding claim wherein the pivot member (10) is provided with bearings to facilitate rotation of the sleeve portions about the pivot member.

6. A conveyor assembly in accordance with claim 5 wherein each of the first and second linkage assemblies (L2, l2) is provided in an assembled condition wherein the hinge link composed of the first and second sleeve formations (9, 13), pivot member (10), and additional bearings is provided in sealed assembly such that the hinge link is mounted for rotation about the pivot member on the sealed bearings.

7. A conveyor assembly in accordance with any preceding claim wherein the first (11a) and second (11b) linkage formations are adapted so as to be mountable together in rigid fixed relationship by a releasable mechanism.

8. A conveyor assembly in accordance with any preceding claim wherein each linkage body conveyor engagement portion (8) is adapted to effect a fixed and rigid engagement upon an end portion of a conveyor; wherein the conveyor engagement portion comprises an engagement plate (8) adapted to present a first fixing face for face to face engagement with a first face of an end of a conveyor and an additional fixing formation (4) is provided adapted to present a second fixing face to a second face of the conveyor opposite the first face such that the conveyor engagement portion (8) and the additional fixing formation (4) face each other whereby the end of the conveyor is clamped therebetween in use; and wherein the engagement plate and the additional fixing formation are provided with complementary through apertures for receipt of connecting members (7) therethrough.

9. A conveyor assembly in accordance with any preceding claim wherein the linkage assembly is provided with an additional receiving aperture to receive an end of a transverse bar (2) and wherein the pivot formation is hollow defining a longitudinal recess shaped to receive an end of a transverse bar (3).

10. A method for the articulated connection of two web sections of an endless conveyor assembly in accordance with any one of claims 1 to 9 comprising:
providing the first web section (1) and the first linkage assembly (L1) of the conveyor assembly;
connecting the same in fixed rigid relationship;
providing the second web section (1) and the second linkage assembly (L2) of the conveyor assembly;
connecting the same in fixed rigid relationship;
**characterised in that**:
the respective linkage formations of the first and second linkage assemblies (L1, L2) are thereafter mounted together in rigid fixed relationship using the connecting members (14) of the conveyor assembly.

## Patentansprüche

1. Eine Fördereranordnung, die mindestens Folgendes beinhaltet:
einen ersten Netzbahnabschnitt;
eine erste Kopplungsanordnung (L1), die Folgendes beinhaltet: einen ersten Kopplungskörper mit einem Förderereingriffsteil (8) an einem ersten Ende, wobei der Förderereingriffsteil (8) in einer festen, steifen Beziehung an einem Ende des ersten Netzbahnabschnitts montiert ist, und einer ersten Buchsenstruktur (9) an einem zu dem ersten Ende distalen zweiten Ende, und ein Schwenkelement (10);
einen zweiten Netzbahnabschnitt;
eine zweite Kopplungsanordnung (L2), die Folgendes beinhaltet: einen ersten Kopplungskörper mit einem Förderereingriffsteil (8) an einem ersten Ende, wobei der Förderereingriffsteil (8) in einer festen, steifen Beziehung an einem Ende des zweiten Netzbahnabschnitts montiert ist, und einer ersten Buchsenstruktur (9) an einem zu dem ersten Ende distalen zweiten Ende, und ein Schwenkelement (10);
**dadurch gekennzeichnet,**
**dass** die erste Kopplungsanordnung (L1) ferner einen zweiten Kopplungskörper mit einer zweiten Buchsenstruktur (13) an einem ersten Ende und einer ersten Kopplungsstruktur (11a) an einem zu dem ersten Ende distalen zweiten Ende beinhaltet, wobei die erste (9) und zweite (13) Buchsenstruktur so geformt sind, dass sie miteinander zusammengebaut werden, um eine einzige Buchsenstruktur bereitzustellen, in der das Schwenkelement (10) dieses umgebend aufgenommen wird;
**dass** die zweite Kopplungsanordnung (L2) ferner einen zweiten Kopplungskörper mit einer zweiten Buchsenstruktur (13) an einem ersten Ende und einer zweiten Kopplungsstruktur (11b) an einem zu dem ersten Ende distalen zweiten Ende beinhaltet, wobei die erste (9) und zweite (13) Buchsenstruktur so geformt sind, dass sie miteinander zusammengebaut werden, um eine einzige Buchsenstruktur bereitzustellen, in der das Schwenkelement (10) dieses umgebend aufgenommen wird;
**dass** die erste (11a) und zweite (11b) Kopplungsstruktur wechselseitig angepasst sind, um in einer steifen, festen Beziehung aneinander montierbar zu sein;
**dass** die erste (11a) und zweite (11b) Kopplungsstruktur wechselseitig eingreifbare Montierplatten mit wechselseitig eingreifbaren Flächen und mit komplementär positionierten Durchgangsöffnungen zur Aufnahme von Verbindungselementen (14) beinhalten und die Fördereranordnung ferner derartige Verbindungselemente (14) beinhaltet;
und **dass** ferner der erste und zweite Kopplungskörper jeder Kopplungsanordnung (L1, L2) jeweils miteinander zusammengebaut sind, um ein Gelenkglied zu bilden, das aus der ersten und zweiten Buchsenstruktur (9, 13) und dem Schwenkelement (10) zur Drehung der Buchsenteile um das Schwenkelement zusammengesetzt ist.

2. Fördereranordnung gemäß Anspruch 1, wobei die erste und zweite Buchsenstruktur (9, 13) einer Kopplungsanordnung (L1; L2) so geformt und konfiguriert sind, dass sie miteinander zusammengebaut werden können, um eine einzige kontinuierliche Buchse bereitzustellen, in der das Schwenkelement (10) dieses umgebend aufgenommen werden kann.

3. Fördereranordnung gemäß Anspruch 2, wobei das Schwenkelement (10) geformt ist, um eine Lauffläche zu definieren und zu präsentieren, um die sich die Buchsenstrukturen (9, 13) drehen können.

4. Fördereranordnung gemäß einem der vorhergehenden Ansprüche, wobei das Schwenkelement (10) ein Schwenkstift ist, der innerhalb der Buchsenstruktur (9, 13) aufgenommen wird.

5. Fördereranordnung gemäß einem der vorhergehenden Ansprüche, wobei das Schwenkelement (10) mit Lagern versehen ist, um die Drehung der Buchsenteile um das Schwenkelement zu erleichtern.

6. Fördereranordnung gemäß Anspruch 5, wobei jede von der ersten und zweiten Kopplungsanordnung (L1, L2) in einem zusammengebauten Zustand bereitgestellt ist, wobei das aus der ersten und zweiten Buchsenstruktur (9, 13), dem Schwenkelement (10) und zusätzlichen Lagern zusammengesetzte Gelenkglied in einer abgedichteten Anordnung bereitgestellt ist, so dass das Gelenkglied zur Drehung um das Schwenkelement auf den abgedichteten Lagern montiert ist.

7. Fördereranordnung gemäß einem der vorhergehenden Ansprüche, wobei die erste (11a) und zweite (11b) Kopplungsstruktur angepasst sind, um durch einen lösbaren Mechanismus in einer steifen, festen Beziehung aneinander montierbar zu sein.

8. Fördereranordnung gemäß einem der vorhergehenden Ansprüche, wobei jeder Kopplungskörper-Förderereingriffsteil (8) angepasst ist, um einen festen und steifen Eingriff an einem Endteil eines Förderers herbeizuführen; wobei der Förderereingriffsteil eine Eingriffsplatte (8) beinhaltet, die angepasst ist, um eine erste Befestigungsfläche für einen Fläche-zu-Fläche-Eingriff mit einer ersten Fläche eines Endes eines Förderers zu präsentieren, und eine zusätzliche Befestigungsstruktur (4) bereitgestellt ist, die angepasst ist, um eine zweite Befestigungsfläche für eine zweite Fläche des Förderers gegenüber der ersten Fläche zu präsentieren, so dass der Förderereingriffsteil (8) und die zusätzliche Befestigungsstruktur (4) einander zugewandt sind, wodurch das Ende des Förderers bei Verwendung zwischen ihnen eingeklemmt ist; und wobei die Eingriffsplatte und die zusätzliche Befestigungsstruktur zur Aufnahme von Verbindungselementen (7) dort hindurch mit komplementären Durchgangsöffnungen versehen sind.

9. Fördereranordnung gemäß einem der vorhergehenden Ansprüche, wobei die Kopplungsanordnung mit einer zusätzlichen Aufnahmeöffnung versehen ist, um ein Ende eines Querstabs (2) aufzunehmen, und wobei die Schwenkstruktur hohl ist und eine längliche Aussparung definiert, die geformt ist, um ein Ende eines Querstabs (3) aufzunehmen.

10. Ein Verfahren für die gelenkige Verbindung zweier Netzbahnabschnitte einer Endlosfördereranordnung gemäß einem der Ansprüche 1 bis 9, das Folgendes beinhaltet:
Bereitstellen des ersten Netzbahnabschnitts (1) und der ersten Kopplungsanordnung (L1) der Fördereranordnung;
Verbinden derselben in einer festen, steifen Beziehung;
Bereitstellen des zweiten Netzbahnabschnitts (1) und der zweiten Kopplungsanordnung (L2) der Fördereranordnung;
Verbinden derselben in einer festen, steifen Beziehung;
**dadurch gekennzeichnet, dass**:
die jeweiligen Kopplungsstrukturen der ersten und zweiten Kopplungsanordnung (L1, L2) danach unter Verwendung der Verbindungselemente (14) der Fördereranordnung in einer steifen, festen Beziehung aneinander montiert werden.

## Revendications

1. Un ensemble de bande transporteuse comprenant au moins :
une première section de toile ;
un premier ensemble de liaison (L1) comprenant un premier corps de liaison ayant une portion de mise en prise avec la bande transporteuse (8) au niveau d'une première extrémité, laquelle portion de mise en prise avec la bande transporteuse (8) est montée sur une extrémité de la première section de toile dans une relation rigide fixe, et une première formation de manchon (9) au niveau d'une deuxième extrémité distale par rapport à la première extrémité, et un élément pivot (10) ;
une deuxième section de toile ;
un deuxième ensemble de liaison (L2) comprenant un premier corps de liaison ayant une portion de mise en prise avec la bande transporteuse (8) au niveau d'une première extrémité, laquelle portion de mise en prise avec la bande transporteuse (8) est montée sur une extrémité de la deuxième section de toile dans une relation rigide fixe, et une première formation de manchon (9) au niveau d'une deuxième extrémité distale par rapport à la première extrémité, et un élément pivot (10) ;
**caractérisé** :
**en ce que** le premier ensemble de liaison (L1) comprend en sus un deuxième corps de liaison ayant une deuxième formation de manchon (13) au niveau d'une première extrémité et une première formation de liaison (11a) au niveau d'une deuxième extrémité distale par rapport à la première extrémité, dans lequel les première (9) et deuxième (13) formations de manchon sont façonnées de manière à être assemblées l'une avec l'autre pour fournir une formation de manchon unique qui reçoit l'élément pivot (10) de façon à en faire le tour ;
**en ce que** le deuxième ensemble de liaison (L2) comprend en sus un deuxième corps de liaison ayant une deuxième formation de manchon (13) au niveau d'une première extrémité et une deuxième formation de liaison (11b) au niveau d'une deuxième extrémité distale par rapport à la première extrémité, dans lequel les première (9) et deuxième (13) formations de manchon sont façonnées de manière à être assemblées l'une avec l'autre pour fournir une formation de manchon unique qui reçoit l'élément pivot (10) de façon à en faire le tour ;
**en ce que** les première (11a) et deuxième (11b) formations de liaison sont mutuellement conçues de manière à pouvoir être montées l'une sur l'autre dans une relation fixe rigide ;
**en ce que** les première (11a) et deuxième (11b) formations de liaison comprennent des plaques de montage pouvant se mettre mutuellement en prise avec des faces pouvant se mettre mutuellement en prise et avec des ouvertures traversantes positionnées de manière complémentaire pour la réception d'éléments de raccordement (14), et l'ensemble de bande transporteuse comprend en sus de tels éléments de raccordement (14) ;
et en sus en ce que les premier et deuxième corps de liaison de chaque ensemble de liaison (L1, L2) sont respectivement assemblés l'un avec l'autre de manière à constituer une biellette d'articulation composée des première et deuxième formations de manchon (9, 13) et de l'élément pivot (10) pour la rotation des portions de manchon autour de l'élément pivot.

2. Un ensemble de bande transporteuse conformément à la revendication 1 dans lequel les première et deuxième formations de manchon (9, 13) d'un ensemble de liaison (L1 ; L2) sont façonnées et configurées de manière à pouvoir être assemblées l'une avec l'autre afin de fournir un manchon continu unique qui peut recevoir l'élément pivot (10) de façon à en faire le tour.

3. Un ensemble de bande transporteuse conformément à la revendication 2 dans lequel l'élément pivot (10) est façonné afin de définir et présenter une surface de roulement autour de laquelle les formations de manchon (9, 13) peuvent tourner.

4. Un ensemble de bande transporteuse conformément à n'importe quelle revendication précédente dans lequel l'élément pivot (10) est un pivot reçu à l'intérieur de la formation de manchon (9, 13).

5. Un ensemble de bande transporteuse conformément à n'importe quelle revendication précédente dans lequel l'élément pivot (10) est pourvu de roulements afin de faciliter la rotation des portions de manchon autour de l'élément pivot.

6. Un ensemble de bande transporteuse conformément à la revendication 5 dans lequel chacun des premier et deuxième ensembles de liaison (L1, L2) est fourni dans un état assemblé dans lequel la biellette d'articulation composée des première et deuxième formations de manchon (9, 13), de l'élément pivot (10), et de roulements additionnels est fournie dans un ensemble étanche de telle sorte que la biellette d'articulation soit montée pour rotation autour de l'élément pivot sur les roulements étanches.

7. Un ensemble de bande transporteuse conformément à n'importe quelle revendication précédente dans lequel les première (11a) et deuxième (11b) formations de liaison sont conçues de manière à pouvoir être montées l'une sur l'autre dans une relation fixe rigide grâce un mécanisme libérable.

8. Un ensemble de bande transporteuse conformément à n'importe quelle revendication précédente dans lequel chaque portion de mise en prise avec la bande transporteuse (8) de corps de liaison est conçue pour effectuer une mise en prise fixe et rigide sur une portion d'extrémité d'une bande transporteuse ; dans lequel la portion de mise en prise avec la bande transporteuse comprend une plaque de mise en prise (8) conçue pour présenter une première face de fixation pour une mise en prise face à face avec une première face d'une extrémité d'une bande transporteuse et une formation de fixation additionnelle (4) est fournie, conçue pour présenter une deuxième face de fixation à une deuxième face de la bande transporteuse opposée à la première face, de telle sorte que la portion de mise en prise avec la bande transporteuse (8) et la formation de fixation additionnelle (4) se font face l'une l'autre grâce à quoi l'extrémité de la bande transporteuse est pincée entre celles-ci lors de l'utilisation ; et dans lequel la plaque de mise en prise et la formation de fixation additionnelle sont pourvues d'ouvertures traversantes complémentaires pour la réception d'éléments de raccordement (7) à travers celles-ci.

9. Un ensemble de bande transporteuse conformément à n'importe quelle revendication précédente dans lequel l'ensemble de liaison est pourvu d'une ouverture de réception additionnelle afin de recevoir une extrémité d'une barre transversale (2) et dans lequel la formation de pivot est creuse définissant un renfoncement longitudinal façonné afin de recevoir une extrémité d'une barre transversale (3).

10. Une méthode pour le raccordement articulé de deux sections de toile d'un ensemble de bande transporteuse sans fin conformément à l'une quelconque des revendications 1 à 9 comprenant :
le fait de fournir la première section de toile (1) et le premier ensemble de liaison (L1) de l'ensemble de bande transporteuse ;
le fait de raccorder les susdits dans une relation rigide fixe ;
le fait de fournir la deuxième section de toile (1) et le deuxième ensemble de liaison (L2) de l'ensemble de bande transporteuse ;
le fait de raccorder les susdits dans une relation rigide fixe ;
**caractérisée en ce que** :
les formations de liaison respectives des premier et deuxième ensembles de liaison (L1, L2) sont par la suite montées l'une sur l'autre dans une relation fixe rigide à l'aide des éléments de raccordement (14) de l'ensemble de bande transporteuse.
